# EUROPEAN PATENT SPECIFICATION

(11) **EP 1 601 941 B1**
(45) Date of publication and mention of the grant of the patent: **29.11.2006**
(21) Application number: 04713443.2
(22) Date of filing: 20.02.2004
(51) Int. Cl.: G01K 1/08

(54) **SUBMERGED SENSOR IN METALLURGICAL VESSEL**
TAUCHSENSOR IN METALLURGISCHEN GEFÄSS
CAPTEUR IMMERGE DANS UN RECIPIENT METALLURGIQUE

(30) Priority: 20.02.2003 US 448805 P
(43) Date of publication of application: 07.12.2005
(73) Proprietor: VESUVIUS CRUCIBLE COMPANY, Wilmington, DE 19803 (US)
(72) Inventor: HEASLIP, Lawrence, Burlington, Ontario L7L-1L7 (CA); DORRICOTT, James, Burlington, Ontario L7M-4E8 (CA); STEWART, Jason, Cranberry, PA 16066 (US); VAN DER MAAT, Paul, B-9040 Gent (BE)
(74) Representative: Debled, Thierry
(86) International application number: PCT/US2004/005249
(87) International publication number: WO 2004/074793

(56) References cited:
- US-A- 4 749 416
- US-B1- 6 474 404

## Description

### FIELD OF THE INVENTION

The invention relates to a submerged sensor adapted for use in a metallurgical vessel and, more specifically, to a submerged temperature sensor located in a tundish for continuous casting.

### BACKGROUND OF THE INVENTION

The ability to continuously monitor the status of molten metal in a metallurgical vessel is highly desirable for both economic and quality reasons. Accurate monitoring can, for example, greatly reduce energy consumption caused by overheating. Other benefits of continuously monitoring molten metal conditions include the ability to measure high temperature phase changes, chemical reactions, and other related phenomena.

Certain problems exist when measuring conditions of molten metal within a metallurgical vessel. These problems include extremely aggressive slags, thermal shock, violent turbulence from material additions, argon stirring, splashing and skulling, and difficulties in fixing the sensor in the vessel.

Sensors are typically encased in a protective assembly. Sensors include chemical sensors, such as oxygen sensors, and temperature sensors, such as thermocouples. Thermocouples for measuring molten metal temperatures have been described in, for example, US 4749416. Such prior art arrangements permanently fix the thermocouple in a sidewall or bottom of the vessel. Alternatively, thermocouples may include a moveable protective assembly as described in US 4721533, US 4746534, US 5071258 and US 6139180. Movable protective assemblies typically insert the thermocouple through a floating slag layer into a bath of molten metal. Slag is very corrosive and a thermocouple protective assembly, which is in contact with slag, must combine good thermal conductivity and the ability to withstand chemical attack by the slag layer. A minimum one hundred-hour service life is desired.

Refractory materials with good thermal conductivity typically include carbon, Unfortunately, carbon detracts from slag corrosion resistance and may lead to premature failure after as few as ten hours of operation. Premature failure can also occur due to wire fracture, "emf drift," and high temperature chemical reactions. Carbon in the protective assembly may accentuate such failures by participating in chemical reactions damaging to the sensor. Encasing the thermocouple inside a refractory metal sheath within the protective assembly has been effective at reducing undesirable chemical reactions. Unfortunately, such metal sheaths are expensive and are not entirely effective. Even a few milligrams of contaminants are sufficient to destroy the thermocouple by fracturing the wire, particularly along grain boundaries, or causing emf drift as a result of reaction product around the thermocouple.

As a further complication, an operator is often interested in the status of the molten metal actually exiting the vessel. In continuous casting, metal exits the vessel through a bottom outlet. The prior art is deficient in that the sensor is typically located near the surface of the molten metal bath. The sensor records, therefore, only near the surface and not near the outlet. Gradients in the vessel ensure that measurements near the surface of the bath are unlikely to be identical with measurements near the outlet. For example, the temperature near the top of a bath will often differ substantially from the temperature at the outlet. Sensors used in the prior art can be lengthened to extend closer to the outlet but this increases both the buoyant and inertial forces acting on the sensor. High buoyancy or inertial forces can cause dangerous conditions if control over the sensor is lost. The sensor may then eject violently from the bath. Additionally, a long sensor is more costly and more subject to premature failure.

A further deficiency of a prior art sensor descending through the surface of the bath is the need for an external support. The external support is highly inconvenient and subject to damage by heat rising from the molten metal and by collision with surrounding structures or equipment during movement of the vessel. The external support must not obstruct vessel movement. Consequently, the support must be placed so as not to obstruct movement or it must be disconnected, repositioned and reconnected each time the vessel is moved. The obstructive nature of the external support often leads to damage of the sensor or the external support.

A need exists for a sensor that is easy to install and operate while permitting measurement near the outlet of a metallurgical vessel. Preferably, the sensor should avoid high buoyancy and inertial forces. The sensor should be unaffected by slag corrosion, and should not interfere with movement of the metallurgical vessel. Preferably, an external support is unnecessary. The sensor should not include refractory materials that deleteriously affect the sensor.

### SUMMARY OF THE PRESENT INVENTION

The present invention describes a submerged sensor for use in a metallurgical vessel, such as a tundish. The sensor is positioned so that in use it is below a surface of a molten metal bath within the vessel. The sensor conveniently extends through the vessel wall and protrudes into the volume of the vessel. A terminal end of the sensor is encased in a protective assembly. A refractory material may surround the protective assembly.

An object of the invention is to provide a metallurgical vessel with a sensor that either has no buoyancy in a metal bath or resists the buoyancy force without an external support to secure the sensor. The absence of an external support eliminates the possibility of breakage of the support during movement of the vessel, and permits movement of the vessel without manipulation, repositioning, connecting or disconnecting of an external support. A second object of the invention is to provide a sensor suitable for measuring the lower portion of the metal bath where an outlet for the metallurgical vessel is typically located. Another object of the invention is to position the sensor away from the corrosive effects of slag. A further object is to provide a vessel with a sensor that projects.into the molten metal, thereby altering and controlling the pattern of metal flow in the vessel.
In one embodiment, the sensor may be a temperature sensor, such as a thermocouple.
The temperature sensor can be simple, easy to install and remove, and is preferably disposable. The sensor permits continuous temperature measurement of molten metal in a vessel. In a second embodiment, the sensor is placed adjacent to an outlet of the vessel, such as that used in continuous casting, so that the sensor actually measures the outflow from the vessel. In another embodiment, the sensor may be placed along the walls of the vessel or within dams, weirs or baffles inside the volume of the vessel.
In still another embodiment, the protective assembly of the invention can be shaped so as to control the pattern of molten metal flow in the vessel or measure more accurately molten metal exiting the vessel. The invention can combine the functionality required for flow pattern modification such as provided by a tundish with a dam, impact pad or baffle, with the functionality required for molten metal temperature measurement. This combination reduces cost and complexity of the tundish.

Other advantages of the invention include the need for a relatively short protective assembly, thereby reducing cost, and a configuration that imparts substantially only compressive forces on the assembly, which forces a ceramic assembly most easily resists.

### BRIEF DESCRIPTION OF THE DRAWINGS

Fig. 1. shows a side view of a prior art metallurgical vessel with a sensor.
Fig. 2 shows a side view of a prior art metallurgical vessel with a sensor and wier.
Fig. 3a shows a side view of a metallurgical vessel with a sensor of the present invention.
Fig. 3b shows a top view of the metallurgical vessel of fig. 3a.
Fig. 3c shows a side view of a sensor of the present invention.
Fig. 4a shows a top view of a vessel with a sensor that projects into the volume of the vessel.
Fig. 4b shows a cross-section of the projecting sensor of fig. 4a.

### DETAILED DESCRIPTION OF THE INVENTION

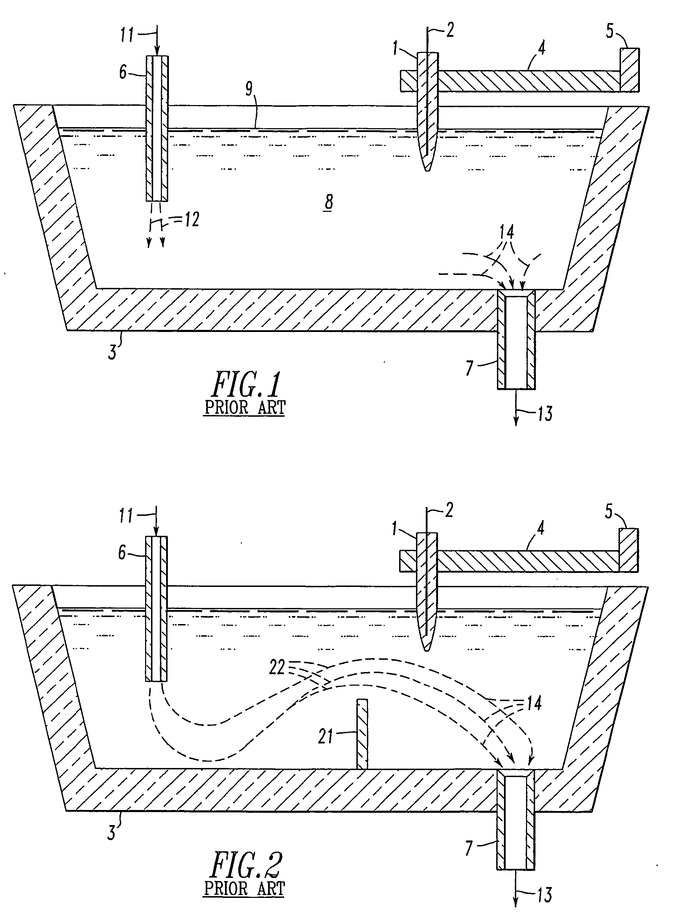

Figure 1 is a sectional view of a prior art metallurgical vessel 3 with an external sensor 2. The sensor 2 enters the molten metal bath 8 through the top surface 9 of the bath 8. Frequently, the top surface 9 includes a layer of slag floating on the bath 8. The sensor may be, for example, a temperature-measuring device such as a thermocouple. The sensor is at least partially enclosed within a protective assembly 1 and is typically at least partially immersed within the bath 8 through the top surface 9. Immersion is necessary to measure conditions in the bath. The protective assembly often comprises a refractory ceramic and may also include an internal sheath into which the sensor is placed. The protective assembly of the prior art must resist corrosion by slag and may include a slag-resistant sleeve. The sheath may comprise a refractory ceramic or metal, such as molybdenum or high purity alumina.

In the continuous casting of metal, an upstream metal flow 11 from an upstream vessel (not shown) enters a pouring tube 6 and then into the metallurgical vessel as an incoming flow 12. The pouring tube typically discharges the incoming stream 12 below the top surface 9 of the bath 8. A nozzle 7 defines an outlet through the bottom of the vessel 3 and enables molten metal to drain from the vessel. An accelerating flow 14 accelerates to the entrance of the nozzle 7. An outflow 13 leaves the metallurgical vessel 3 through a nozzle 7. The highest velocities of molten metal flow in the metallurgical vessel are typically found in two areas; near the exit end of the pouring tube 6 as illustrated by the incoming flow 12 and at the point where the accelerating flow 14 enters the nozzle 7.

A sensor entering the molten metal bath through the top surface must be affixed to some external support to remain immersed and in place. The external support must fix the sensor position despite both inertial and buoyancy forces. Inertial forces are induced by molten metal flow in the bath. Buoyancy forces arise because the sensor is typically substantially less dense than the molten metal it displaces. Generally, the buoyancy force is much greater than the inertial forces. Figure 1 illustrates an external support 4, which is affixed to the sensor assembly and to some convenient external rigid fixture 5 such as a metallurgical vessel cover or metallurgical vessel car or other neighboring structural fixture.

As shown in Fig. 2, the prior art may include a dam 21 within a metallurgical vessel 3. The dam 21 is used to deflect upward the internal metal flow 22. The deflection reduces stagnation in the upper part of the vessel, and permits the sensor 2 to measure more accurately conditions of the outflow 13 and accelerating flow 14 entering the nozzle. Of course, the prior art sensor 2 does not actually measure the outflow 13 or the accelerating flow 14. The dam 21 only directs more of the flow past the sensor 2. The dam 21 is only one type of projection that could be used to direct the internal flow 22. Other examples include baffles and impact pads. In any case, these devices are separate from the protective assembly 1 and result in additional cost and complexity.

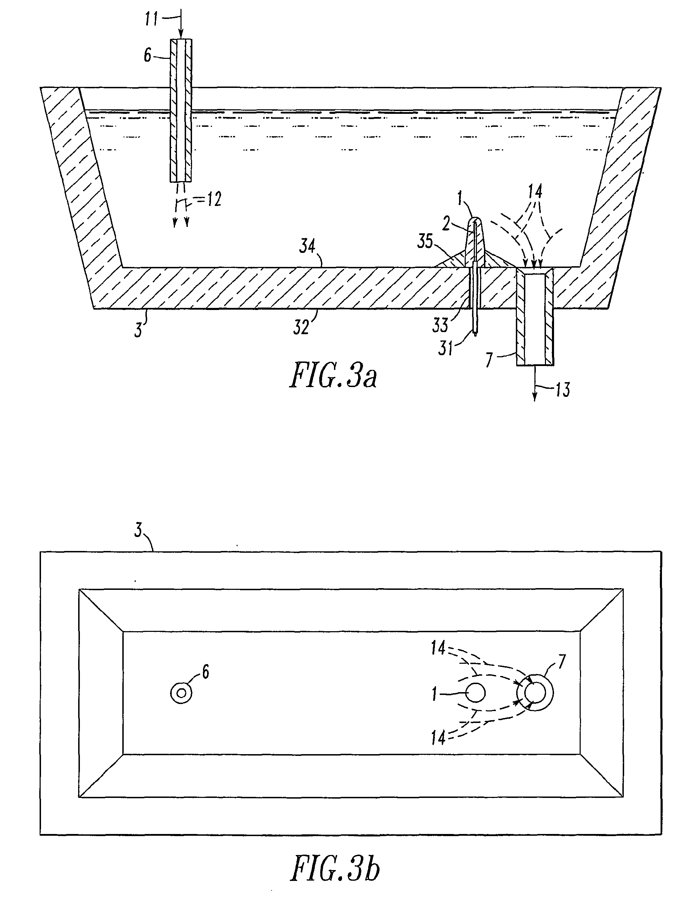

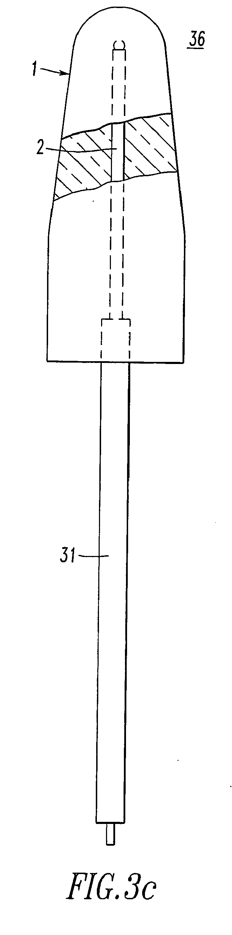

Desirably, a sensor measures an outflow from a vessel. The prior art is deficient in that sensors are inserted into the top of the bath, whereas the molten metal is exiting from the bottom of the bath. Figures 3a, 3b and 3c illustrate a first embodiment of the invention. Figure 3a is a sectional view of a sensor of the invention as used in a metallurgical vessel 3. Figure 3b is a top view of the same. Figure 3c is a view showing the sensor assembly 36 comprising a sensor 2, a protective assembly 1 surrounding an upper portion of the sensor and optionally a protective sleeve 31 surrounding at least a part of a lower portion of the sensor. The sensor may be a temperature measuring device, chemcial sensor, or any other type of sensor known to one skilled in the art. The protective assembly comprises a first refractory composition. Conveniently, the composition comprises a refractory ceramic such as alumina or zirconia. The protective sleeve comprises a second refractory composition, which may or not be the same as the first refractory composition. The first and second compositions may be pressed, cured or fired to instill sufficient mechanical strength to protect the sensor from damage.

Figure 3a shows the vessel 3 having a bottom 32 defining a hole 33 for the sensor assembly. The vessel may be any type of metallurgical vessel but is commonly a tundish or other vessel which, during operation, a substantial volume of the vessel outflows over a relevant time period. The sensor assembly extends through hole 33. Conveniently, the protective assembly 1 rests on the inner surface 34 of the bottom 32. A protective sleeve 31 may be used to protect the sensor from damage. Preferably, a refractory material 35 surrounds the protective assembly 1. The refractory material may comprise one or more refractory compositions, including castable or vibratable materials. More preferably, the refractory material 35 adheres to the protective assembly 1 and to the inner surface 34. Conveniently, the refractory material may also be used beneath the protective assembly 1 in order to fill the hole 33 and reduce the likelihood of an escape of molten metal through the hole 33. The refractory material may also stabilize the protective assembly 1 against inertial forces resulting from molten metal flow.

A vessel of the invention may be made-up in accordance with the above description before movement of the vessel into operating position. After service, the vessel can be moved out of operating position. Residual metal can be dumped from the tundish. After casting, and typically during or after dumping residual metal, the sensor is discarded or recovered. The vessel is then again made ready for service.

The sensor of the invention exposes substantially upward facing or substantially vertical surfaces to the molten metal. Such upward or vertical surfaces are subject to little or no buoyancy forces. In fact, the molten metal exerts mainly compressive forces on the protective assembly. Refractory ceramic materials, which typically comprise the protective assembly, are strongest under compression, so the sensor assembly needs no external support.

Placement of the sensor at the bottom of the vessel also permits conditions in the lower portion of the vessel especially of the outflow to be measured more conveniently. The sensor assembly may be placed close to the nozzle 7. Unlike prior art that extend through the top surface of the molten metal bath, placement near the nozzle does not require lengthening the sensor. Inertial forces are not increased and the amount of material required to make the sensor assembly is unchanged.

Referring to Figure 3a, the incoming flow 12 enters the vessel 3 through a pouring tube 6 submerged in the molten metal bath. The outflow 13 leaves the vessel through a nozzle 7. Immediately around the nozzle 7, an accelerating flow 14 moves toward the nozzle 7. Referring to Figure 3b, the protective assembly projects into the volume of the vessel and partially deflects the accelerating flow 14. The accelerating flow 14 enters the nozzle 7 and becomes the outflow 13. In other words, the location of protective assembly 1 in the lower portion of the vessel near the nozzle 7 ensures the sensor is measuring conditions of the flow just prior to its entrance into the nozzle 7. "Near" means a position around the nozzle from which a sensor is capable of measuring the accelerating flow during casting. Placing the sensor near the outlet reduces differences between the sensor measurement and the actual condition of the outflow.

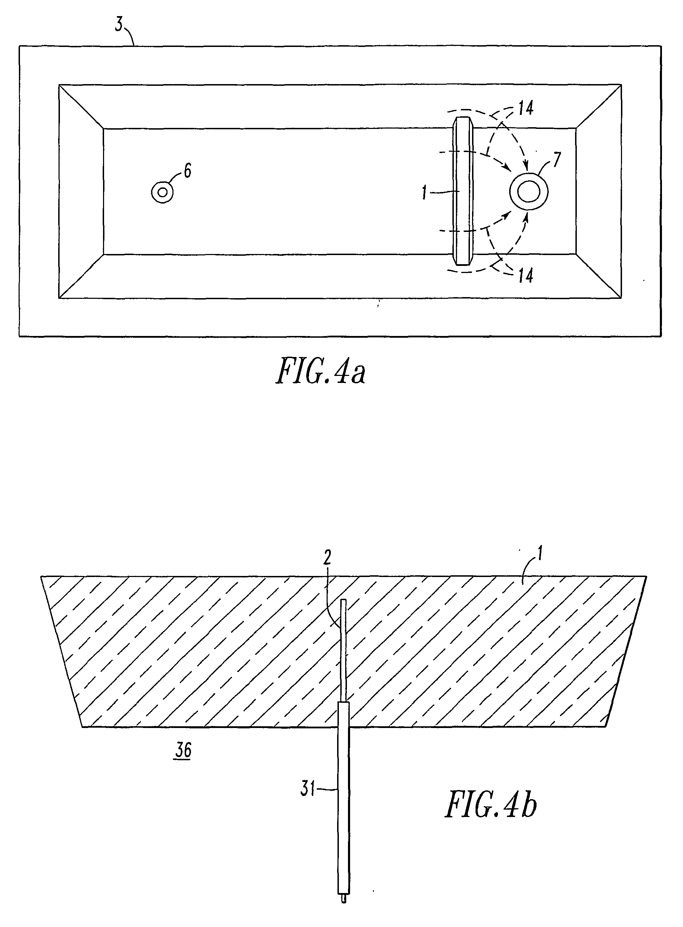

Figures 4a and 4b show a second embodiment of the invention. Figure 4a is a top view of a sensor assembly of the present invention in a metallurgical vessel. Figure 4b is a cross-sectional view of the sensor assembly 36. The assembly includes the protective assembly 1, the sensor 2 and, optionally, the protective pipe 31. This embodiment shows an alternative geometric configuration of the protective assembly 1, in which the protective assembly 1 is in the shape of a dam. In this embodiment, the shape of the protective assembly 1 is used to further alter, deflect, and control the accelerating flow 14. Of course, other geometries for a protective assembly 1 may be used, including baffle shapes, impact pad shapes, weirs, and other shapes, which are known to those skilled in the art.

Obviously, numerous modifications and variations of the present invention are possible. It is, therefore, to be understood that within the scope of the following claims, the invention may be practiced otherwise than as specifically described.

## Claims

1. Metallurgical vessel (3) comprising an interior surface defining an outlet and an interior volume, the interior volume adapted to contain a bath of molten (8) metal having a top surface (9), the vessel including a sensor assembly (36) extending through a hole (33) in the interior surface (34) below the top surface (9) of the bath (8), the sensor assembly (36) comprising a sensor (2) having an upper end, a lower end, and a protective assembly (1) surrounding at least a portion of the upper end of the sensor, **characterized in that** the protective assembly (1) is shaped so as to alter and control the pattern of the flow of molten metal in the vessel (3).

2. Metallurgical vessel according to claim 1, **characterized in that** the interior surface (34) includes a bottom (32) and a plurality of sidewalls.

3. Metallurgical vessel according to claim 2, **characterized in that** the sensor assembly (36) extends through the bottom (32) of the vessel (3).

4. Metallurgical vessel according to any one of the claims 1 to 3, **characterized in that** the protective assembly (1) alters and controls the flow of molten metal toward the outlet.

5. Metallurgical vessel according to any one of the claims 1 to 4, **characterized in that** the protective assembly (1) is located near the outlet.

6. Metallurgical vessel according to any one of the claims 1 to 5, **characterized in that** the protective assembly (1) is larger than the hole (33) in the interior surface (34).

7. Metallurgical vessel according to any one of the claims 1 to 6, **characterized in that** the protective assembly (1) directs the flow of molten metal toward the top surface (9) of the bath (8).

8. Metallurgical vessel according to any one of the claims 1 to 7, **characterized in that** the protective assembly (1) comprises an object selected from the group consisting of a dam (21), impact pad, weir and baffle.

9. Metallurgical vessel according to any one of the claims 1 to 8, **characterized in that** the lower end of the sensor (2) is at least partially covered by a protective pipe (31).

10. Metallurgical vessel according to any one of the claims 1 to 9, **characterized by** the sensor (2) comprises a temperature sensor, preferably a thermocouple.

11. Metallurgical vessel according to any one of claims 1 to 10, **characterized in that** a refractory material (35) at least partially surrounds the protective assembly (1) at the interior surface (34).

12. Metallurgical vessel according to claim 11, **characterized in that** the refractory material comprises a composition selected from the group consisting of castable and vibratable materials.

## Patentansprüche

1. Metallurgischer Behälter (3), umfassend eine Innenseite, die einen Auslass und ein Innenvolumen begrenzt, wobei das Innenvolumen angepasst ist, um ein Bad von geschmolzenem (8) Metall zu enthalten, das eine Oberfläche (9) aufweist, wobei der Behälter eine Sensoranordnung (36) einschließt, die sich unter der Oberfläche (9) des Bades (8) durch eine Öffnung (33) in der Innenseite (34) erstreckt, wobei die Sensoranordnung (36) einen Sensor (2) mit einem oberen Ende, einem unteren Ende sowie eine schützende Anordnung (1) umfasst, die mindestens einen Teil des oberen Endes des Sensors umgibt, **dadurch gekennzeichnet, dass** die schützende Anordnung (1) so geformt ist, dass sie das Muster des Stroms von geschmolzenem Metall im Behälter (3) verändert und steuert.

2. Metallurgischer Behälter nach Anspruch 1, **dadurch gekennzeichnet, dass** die Innenseite (34) einen Boden (32) und eine Mehrzahl von Seitenwänden einschließt.

3. Metallurgischer Behälter nach Anspruch 2, **dadurch gekennzeichnet, dass** sich die Sensoranordnung (36) durch den Boden (32) des Behälters (3) erstreckt.

4. Metallurgischer Behälter nach einem der Ansprüche 1 bis 3, **dadurch gekennzeichnet, dass** die schützende Anordnung (1) den Strom von geschmolzenem Metall in Richtung des Auslasses verändert und steuert.

5. Metallurgischer Behälter nach einem der Ansprüche 1 bis 4, **dadurch gekennzeichnet, dass** die schützende Anordnung (1) nahe dem Auslass angeordnet ist.

6. Metallurgischer Behälter nach einem der Ansprüche 1 bis 5, **dadurch gekennzeichnet, dass** die schützende Anordnung (1) größer als die Öffnung (33) in der Innenseite (34) ist.

7. Metallurgischer Behälter nach einem der Ansprüche 1 bis 6, **dadurch gekennzeichnet, dass** die schützende Anordnung (1) den Strom von geschmolzenem Metall in Richtung der Oberfläche (9) des Bades (8) lenkt.

8. Metallurgischer Behälter nach einem der Ansprüche 1 bis 7, **dadurch gekennzeichnet, dass** die schützende Anordnung (1) ein Objekt umfasst, das aus der aus einem Damm (21), einem Aufprallkissen, einem Wehr und einer Ablenkeinrichtung bestehenden Gruppe ausgewählt ist.

9. Metallurgischer Behälter nach einem der Ansprüche 1 bis 8, **dadurch gekennzeichnet, dass** das untere Ende des Sensors (2) mindestens teilweise von einem schützenden Rohr (31) bedeckt ist.

10. Metallurgischer Behälter nach einem der Ansprüche 1 bis 9, **dadurch gekennzeichnet, dass** der Sensor (2) einen Temperatursensor, vorzugsweise ein Thermoelement, umfasst.

11. Metallurgischer Behälter nach einem der Ansprüche 1 bis 10, **dadurch gekennzeichnet, dass** ein Feuerfestmaterial (35) die schützende Anordnung (1) an der Innenseite (34) mindestens teilweise umgibt.

12. Metallurgischer Behälter nach Anspruch 11, **dadurch gekennzeichnet, dass** das Feuerfestmaterial eine Zusammensetzung umfasst, die aus der Gruppe bestehend aus gießbaren und rüttelbaren Materialien ausgewählt ist.

## Revendications

1. Récipient métallurgique (3) comprenant une surface interne définissant une sortie et un volume interne, le volume interne étant adapté à contenir un bain de métal (8) à l'état fondu ayant une surface supérieure (9), le récipient comprenant un assemblage de senseur (36) s'étendant à travers un trou (33) dans la surface interne (34) sous la surface supérieure (9) du bain (8), l'assemblage de senseur (36) comprenant un senseur (2) possédant une extrémité supérieure, une extrémité inférieure et un assemblage de protection (1) entourant au moins une partie de l'extrémité supérieure du senseur, **caractérisé en ce que** l'assemblage de protection (1) est conformé de manière à altérer et contrôler le profil d'écoulement du métal à l'état fondu dans le récipient (3).

2. Récipient métallurgique selon la revendication 1, **caractérisé en ce que** la surface interne (34) comprend un fond (32) et une pluralité de faces latérales.

3. Récipient métallurgique selon la revendication 2, **caractérisé en ce que** l'assemblage de senseur (36) s'étend à travers le fond (32) du récipient (3).

4. Récipient métallurgique selon l'une quelconque des revendications 1 à 3, **caractérisé en ce que** l'assemblage de protection (1) altère et contrôle l'écoulement du métal à l'état fondu vers la sortie.

5. Récipient métallurgique selon l'une quelconque des revendications 1 à 4, **caractérisé en ce que** l'assemblage de protection (1) est disposé près de la sortie.

6. Récipient métallurgique selon l'une quelconque des revendications 1 à 5, **caractérisé en ce que** l'assemblage de protection (1) est plus grand que le trou (33) dans la surface interne (34).

7. Récipient métallurgique selon l'une quelconque des revendications 1 à 6, **caractérisé en ce que** l'assemblage de protection (1) dirige l'écoulement de métal à l'état fondu vers la surface supérieure (9) du bain (8).

8. Récipient métallurgique selon l'une quelconque des revendications 1 à 7, **caractérisé en ce que** l'assemblage de protection (1) comprend un objet choisi parmi le groupe consistant en une digue (21), une dalle d'impact, un barrage et un déflecteur.

9. Récipient métallurgique selon l'une quelconque des revendications 1 à 8, **caractérisé en ce que** l'extrémité inférieure du senseur (2) est au moins partiellement couverte par un tube de protection (31).

10. Récipient métallurgique selon l'une quelconque des revendications 1 à 9, **caractérisé en ce que** le senseur (2) comprend un senseur de température, de préférence, un thermocouple.

11. Récipient métallurgique selon l'une quelconque des revendications 1 à 10, **caractérisé en ce qu'**un matériau réfractaire (35) entoure au moins partiellement l'assemblage de protection (1) à la surface interne (34).

12. Récipient métallurgique selon la revendication 11, **caractérisé en ce que** le matériau réfractaire comprend une composition choisie parmi le groupe consistant en les matériaux coulables ou vibro-coulables.
